# FASCICULE DE BREVET EUROPEEN

(11) **EP 1 660 840 B1**
(45) Date de publication et mention de la délivrance du brevet: **29.03.2017**
(21) Numéro de dépôt: 04787302.1
(22) Date de dépôt: 03.09.2004
(51) Int. Cl.: G01B 3/14

(54) **GABARIT DE CONTROLE DE LA GEOMETRIE DE PROFILES FORMES ET/OU CINTRES**
CALIBER ZUR PRÜFUNG DER GEOMETRIE VON GEFORMTEN UND / ODER GEBOGENEN PROFILEN
TEMPLATE FOR CHECKING THE GEOMETRY OF SHAPED AND/OR BENT PROFILES

(30) Priorité: 04.09.2003 FR 0310446
(43) Date de publication de la demande: 31.05.2006
(73) Titulaire: Jaubjaub Consulting Sarl, 32430 Cologne (FR)
(72) Inventeur: JAUBERT, Philippe, F-32430 Cologne (FR)
(74) Mandataire: Ipside
(86) Numéro de dépôt international: PCT/FR2004/002247
(87) Numéro de publication internationale: WO 2005/024340

(56) Documents cités:
- FR-A- 2 837 277
- US-A- 5 106 290
- US-A- 5 208 995
- US-A- 5 412 877
- US-A- 6 029 333
- US-A- 6 145 212

## Description

L'invention concerne un gabarit de contrôle de la géométrie de profilés formés et/ou cintrés, et notamment de tuyauteries cintrées

Dans de nombreuses industries, notamment automobiles et aéronautiques, un grand nombre de profilés tels que des tuyauteries sont formés puis cintrés ou pliés.

Ces profilés sont coupés à longueur, puis sont éventuellement formés aux extrémités et équipés de composants divers tels qu'écrous, pattes de fixation, jupes ..., et sont cintrés ou pliés dans l'espace suivant des caractéristiques dimensionnelles précises.

A la fin de la réalisation de ces profilés, il est enfin procédé à un contrôle géométrique de ces derniers.

Une première méthode pour déterminer si un profilé plié ou cintré est conforme aux tolérances géométriques exigées, consiste à utiliser un bras de mesure poly-articulé spécialisé dans la mesure de profilés cintrés. Cette méthode qui donne des résultats de mesure chiffrés, présente l'inconvénient d'être une méthode de contrôle très longue qui suppose, en outre, l'acquisition d'un appareil de mesure onéreux et la formation d'opérateurs qualifiés.

Une deuxième méthode pour déterminer si un profilé formé et/ou cintré est conforme aux tolérances géométriques exigées, consiste à utiliser un gabarit de contrôle.

Ce gabarit est formé d'un montage mécanique présentant une empreinte élargie et partielle du profilé équipé de ses composants et accessoires. Cette empreinte est réalisée au moyen d'une série de rainures réalisées dans le montage, de dimensions correspondant à la section du profilé additionnée de la tolérance de positionnement du dit profilé. Ce gabarit est aussi conçu pour permettre l'introduction du profilé dans les rainures du gabarit, ainsi que son retrait après contrôle

Un tel gabarit permet une comparaison rapide du profilé à contrôler avec la forme et le parcours définis par la géométrie de ce gabarit : si l'introduction du profilé à contrôler à l'intérieur des rainures du gabarit se fait naturellement et sans déformation du dit profilé, alors ce dernier est considéré conforme aux exigences géométriques.

De façon classique, les gabarits actuels sont constitués d'une série de blocs en aluminium ou en bois fixés fermement sur une plaque épaisse et rigide généralement réalisée dans la même matière que les blocs. Dans ces blocs sont, en outre, réalisées, souvent par usinage, des rainures ou des marques parfois additionnées de goupilles sur tout ou partie de la longueur du parcours correspondant à l'image du parcours du profilé à contrôler. Ces rainures ont généralement des dimensions en largeur et en hauteur égales à celles du profilé, additionnées de la valeur de la tolérance de positionnement du dit profilé au niveau de cette rainure.

Un autre mode de réalisation de ces gabarits consiste à souder des supports métalliques entre eux et sur une plaque de base. Sur ces supports sont usinés ou fixés, éventuellement par soudure, des pièces, dites guides, formant des parties de rainures dans lesquelles est introduit le profilé à contrôler.

Les méthodes de contrôle consistant à utiliser de tels gabarits sont toutes parfaitement connues et maîtrisées par les hommes du métier, et ont pour avantage de permettre un contrôle très rapide des profilés tels que tuyauteries.

Par contre, les gabarits utilisés pour la mis en oeuvre de ces méthodes de contrôle s'avèrent très volumineux et nécessitent des zones de stockage importantes car, en outre, ils ne sont pas démontables et ne peuvent pas être empilés les uns sur les autres.

De plus, les procédés de fabrication de ces gabarits sont onéreux car ils sont difficilement industrialisables et nécessitent généralement des usinages dans la masse.

En vue de pallier ce dernier inconvénients, le brevet US 6,029,333 décrit un procédé de fabrication particulier de gabarits de contrôle consistant à utiliser une tôle d'un seul tenant positionnée par tenons et mortaises sur une plaque de base, et définit un procédé de production de ces gabarits au moyen d'une CAO et d'une machine de découpe de plaques.

Bien qu'un tel procédé de fabrication conduise effectivement à des coûts de production réduits par rapport aux procédés classiques de fabrication, il présente toutefois, en contrepartie, plusieurs inconvénients majeurs.

En effet, et en premier lieu selon ce procédé, l'obtention d'une précision de montage correcte du gabarit de contrôle suppose la réalisation de pliages parfaits et précis de la tôle. Or, de tels pliages s'avèrent très difficiles voire impossibles à réaliser en automatique, et sont, dans la pratique, à l'origine d'erreurs de pliage qui, si elles n'empêchent pas le montage de la tôle sur la plaque, conduisent à une déformation de la dite tôle, notamment dans sa partie supérieure qui sert au contrôle du profilé, avec pour conséquence une modification sensible de la définition du parcours du dit profilé, et une impossibilité de garantir la précision de montage du gabarit.

De plus, l'allongement différentiel de matière dans les plis génère des variations de longueur du développé de la tôle qui peuvent empêcher un assemblage correct de cette tôle sur la plaque de base, notamment lorsque les profilés à contrôler possèdent de nombreux coudes séparés par des parties droites très courtes, telles que les tuyauteries de freins de roues arrière de véhicules automobiles. Ces allongements différentiels de la tôle peuvent ainsi déboucher sur une impossibilité de montage de la dite tôle sur la plaque de base et donc à l'impossibilité de réaliser le gabarit de contrôle.

Par ailleurs, certaines géométries de profilés peuvent conduire à la réalisation de tôles de forme globalement linéaire qui nécessitent d'être fixées de façon très rigide et défmitive sur la plaque de base, en vue de garantir la stabilité et l'indéformabilité de l'intégralité de la longueur des dites tôles.

En dernier lieu, en présence de certains profilés de formes complexes, telles que les tuyauteries couramment rencontrées dans l'industrie automobile, ce procédé de fabrication par pliages successifs d'une tôle peut s'avérer impossible à mettre en oeuvre du fait de l'encombrement classique des outils de pliage.

En résumé, le procédé de réalisation d'un gabarit ci-dessus décrit ne permet pas de garantir un respect des tolérances pour toutes les configurations de profilés, n'est pas facile à mettre en oeuvre, et n'apporte pas de solutions autorisant un montage et un démontage faciles du gabarit tout en conservant les caractéristiques de tolérance de ce dernier. De plus, même en cas de démontage de la tôle pliée par rapport à la plaque de base, le stockage du gabarit s'avère peu aisé, et sa géométrie non régulière empêche un rangement exempt de risques de déformations des pliages.

Le brevet US 5,412,877 décrit, en référence aux figures 23 à 27 de ce brevet, un autre procédé de fabrication particulier de gabarits de contrôle consistant à réaliser tous les composants à partir de pièces découpées par une machine laser, et à assembler ces composants moyennant un nombre important de tenons et mortaises solidarisés par collage.

En premier lieu, et en vue de conférer une bonne rigidité aux gabarits, cette méthode de réalisation présente l'inconvénient de requérir l'usinage d'un nombre important de pièces ainsi qu'un temps d'assemblage relativement long de ces dernières.

De plus, le concept de ce gabarit et le mode de fixation par collage des tenons et mortaises rendent ce gabarit indémontable. Un démontage éventuel supposerait, en effet, une opération de montage très longue et minutieuse imposant, pour éviter des imperfections de montage, une opération de contrôle sur une machine de mesure trois dimensions. Par ailleurs, un mauvais enfoncement d'un tenon dans une des mortaises et son collage ultérieur sont toujours possibles, avec pour conséquence la réalisation d'un gabarit impropre à l'usage auquel il est destiné. En effet, selon le concept décrit, aucune disposition ne permet de garantir que les différents composants constituant le gabarit sont plaqués entre eux et sont donc bien positionnés.

Dans la pratique, et du fait des inconvénients précités, il s'avère que les deux méthodes précitées décrites dans les brevets US 6,029,333 et US 5,412,877, en référence aux figures 23 à 30, ne sont quasiment pas mises en oeuvre dans l'industrie, notamment dans les secteurs automobile et aéronautique. En fait, il s'avère qu'une des méthodes couramment utilisées à l'heure actuelle dans les secteurs automobile et aéronautique, dérive de la méthode illustrée aux figures 1 à 22 du brevet US 5,412,877. Néanmoins, le marquage des trajectoires par une machine laser est alors utilisé uniquement sur des gabarits en bois car, comme indiqué dans ce brevet, ce produit se carbonise et le marquage laisse une marque noire visible en profondeur. Le document, WO-A-03/078921 divulgue un dispositif de contrôle de la géométrie d'un profile formé.

L'origine de la présente invention a été de constater que les gabarits actuels sont à la fois lourds et difficiles à manutentionner, onéreux et difficiles à réaliser, et difficiles à démonter et remonter sans dégradations des caractéristiques dimensionnelles du gabarit, caractéristiques qui définissent la trajectoire à contrôler du tube et dont toute détérioration est donc inacceptable pour un gabarit de contrôle ; l'objectif de l'invention est donc de pallier l'ensemble de ces inconvénients.

A cet effet, l'invention vise un gabarit de contrôle de la géométrie de profilés (T) formés et/ou cintrés présentant des tronçons rectilignes et des tronçons cintrés, le dit gabarit de contrôle étant composé d'une base comportant une plaque, dite plaque-support, dans laquelle sont ménagées des lumières, et d'une superstructure définissant une empreinte du profilé (T) à contrôler et dotée de tenons adaptés pour s'ajuster et s'encastrer chacun dans une lumière de la plaque-support. Selon l'invention, la base et la superstructure de ce gabarit se caractérisent en ce que :
- la plaque-support comprend, d'une part, des lumières s'étendant selon des parallèles (xi) aux projections orthogonales de chaque tronçon rectiligne du profilé (T), et d'autre part, pour chacun de ces tronçons rectilignes, au moins une lumière s'étendant selon au moins une perpendiculaire (yi) à la projection orthogonale (xi) du dit tronçon rectiligne,
- la superstructure comprend, pour chaque tronçon rectiligne du profilé (T) :
   - une potence constituée d'une plaque plane prolongée, pour chaque lumière ménagée dans la plaque-support selon une parallèle (xi) à la projection orthogonale du tronçon rectiligne, d'un tenon adapté pour s'ajuster et s'encastrer dans la dite lumière, la dite potence étant équipée, en partie supérieure, d'au moins un dispositif de guidage du dit tronçon rectiligne,
   - au moins un renfort constitué d'une plaque plane prolongée, pour chaque lumière ménagée dans la plaque-support selon une perpendiculaire (yi) à la projection orthogonale (xi) du tronçon rectiligne, d'un tenon adapté pour s'ajuster et s'encastrer dans la dite lumière,
   - la dite potence et chacun des dits renforts comportant chacun une encoche formant une fente verticale ménagée de façon à s'étendre respectivement depuis la partie inférieure de la potence et la partie supérieure du renfort, les dites fentes verticales étant positionnées de façon à obtenir un encastrement mutuel de chacun des éléments, potence et renfort, dans la fente verticale de l'autre élément, dans une position emboîtée où les dits potence et renfort s'étendent perpendiculairement,
   - chaque tenon formé dans le prolongement de la potence et du renfort présentant une longueur supérieure à l'épaisseur de la plaque-support adaptée pour dépasser en sous face de cette dernière, et comportant une forme d'encoche apte à permettre d'assurer une fixation rigide et sans jeu de la potence et du renfort sur la plaque-support.

(Il convient de noter, qu'à des fins de simplification, le gabarit selon l'invention est revendiqué et décrit dans la présente demande dans sa position normale d'utilisation en vue d'un contrôle de la géométrie d'un profilé, la plaque-support s'étendant horizontalement et les potences et renforts s'étendant perpendiculairement par rapport à cette plaque-support, c'est-à-dire verticalement. Par conséquent, les termes verticale, horizontal, supérieur, inférieur... sont utilisés en référence à un tel positionnement).

Selon l'invention, le gabarit est scindé en plusieurs tronçons unitaires dédiés chacun au guidage d'un seul tronçon rectiligne de profilé, et comportant, outre le dispositif de guidage, deux simples plaques planes obtenues par découpe, une potence et un renfort, dont la précision du positionnement est garantie grâce, d'une part, à la fixation rigide de tenons dans des mortaises, et d'autre part, à l'encastrement mutuel de chaque potence avec le renfort associé.

Ce gabarit est donc constitué de pièces planes obtenues par une simple opération de découpe, et ne nécessitant donc aucune opération de pliage..., dont la fixation sur la plaque-support est, en outre, obtenue par le biais d'emboîtements, et ne nécessite donc aucune opération complexe d'assemblage telle que collage, piètage...

Cette simplicité de conception conduit ainsi à éliminer toutes les erreurs potentielles liées aux opérations actuelles de fabrication des gabarits, telles que collage, pliage...

Selon un mode de réalisation avantageux de l'invention, chaque tenon des potences et des renforts comporte une forme d'encoche adaptée pour définir un logement pour des moyens de fixation amovible tels que notamment goupille ou clavette éventuellement élastique.

Selon ce mode de réalisation, les encoches réalisées dans les tenons, qui peuvent avoir des formes variables, permettent d'insérer des éléments de fixation amovible qui assurent le maintien en position des potences et des renforts sur la plaque-support. Ces éléments de fixation autorisent, en combinaison avec les systèmes d'emboîtement conçus selon l'invention, un démontage et un remontage des éléments formant le gabarit, et permettent donc notamment de stocker ce gabarit dans son état démonté.

Selon une variante de réalisation avantageuse autorisant le démontage et le remontage du gabarit, chaque tenon des potences et des renforts comporte une forme d'encoche formée de deux pattes, dont au moins une patte d'encliquetage, aptes à venir se verrouiller en sous face de la plaque-support, et déformables élastiquement entre une position naturelle écartée de verrouillage et une position rapprochée de déverrouillage.

Par ailleurs, de façon avantageuse selon l'invention, les dispositifs de guidage équipant les potences comportent une rainure inférieure apte à venir coiffer sans jeu les dites potences.

Cette rainure inférieure permet de positionner précisément les dispositifs de guidage sur les potences. En outre, les dispositifs de guidage peuvent être fabriqués dans un barreau de matière usiné sur toute sa longueur puis découpé à la longueur pour être monté sur chaque potence. Cette procédure permet d'obtenir un coût avantageux de production.

Un autre mode de fabrication peut consister à réaliser les organes de guidage par découpe dans une plaque qui peut, en outre, être telle utilisée pour la découpe des potences et des renforts.

Selon un autre mode de réalisation avantageux de l'invention, les dispositifs de guidage équipant les potences comportent au moins une empreinte supérieure de forme adaptée pour loger un tronçon rectiligne du profilé (T), la dite empreinte étant axée sur le plan vertical de la potence ou axée sur un plan vertical décalé latéralement par rapport au dit plan vertical de la potence.

De tels dispositifs de guidage comportent ainsi une empreinte de contrôle dans laquelle doit rentrer le tronçon rectiligne du profilé pour être considéré comme bon. Généralement, cette empreinte présente les dimensions du profilé auxquelles sont ajoutées les tolérances du contrôle. Ainsi, le contrôle réalisé au moyen du gabarit ne laisse aucune source d'interprétation lors du diagnostic.

De plus, notamment lorsque l'organe de guidage est obtenu par découpe dans une plaque, cette empreinte peut facilement être positionnée soit de façon à être axée par rapport à la potence, soit de façon à être décalée latéralement par rapport à la dite potence, et ainsi être adaptée avec souplesse en fonction du profil longitudinal de chaque profilé à contrôler.

Selon un premier mode de réalisation avantageux, l'empreinte des dispositifs de guidage selon l'invention peut consister en une gorge en forme générale de U présentant un axe de symétrie s'étendant dans un plan orienté d'un angle compris entre 0 et 90 degrés par rapport au plan vertical de la potence.

De plus, avantageusement selon l'invention, l'empreinte supérieure des dispositifs de guidage peut comporter au moins un ergot en saillie dans la dite empreinte, de façon à conférer une forme rétentive à cette empreinte assurant le blocage à l'intérieur de cette dernière de profilés réalisés en un matériau apte à autoriser des déformations élastiques des dits profilés.

Selon un second mode de réalisation avantageux, l'empreinte des dispositifs de guidage selon l'invention peut également consister en un dièdre droit formant deux faces de référence perpendiculaires de positionnement du tronçon rectiligne du profilé T.

Il ressort donc de ce qui précède qu'une multitude de formes d'organes de guidage selon l'invention peut être réalisée en jouant notamment sur les paramètres suivants : nombre et forme des empreintes, positionnement vertical (décalage) de ces empreintes, et orientation des dites empreintes.

Par ailleurs, selon un autre mode de réalisation avantageux de l'invention, chaque renfort comporte au moins un ergot formant une saillie dans la fente verticale du dit renfort, dans la partie supérieure de la dite fente, adapté pour venir se loger dans un évidement ménagé sur chaque potence.

De tels ergots conduisent à garantir la perpendicularité des renforts par rapport à la plaque-support et à la potence associée, et ce quelle que soit la hauteur des dits renforts. De plus, le blocage des ergots dans leur évidement est réversible du fait des faibles dimensions des dits ergots, qui autorisent la pénétration de ces derniers dans leur évidement par déformation élastique du renfort. De ce fait, de tels ergots ne s'opposent en rien au démontage et au remontage du gabarit.

Selon un autre mode de réalisation avantageux de l'invention, chaque renfort présente une forme asymétrique relativement à l'axe de la fente verticale de la potence correspondante. Une telle asymétrie conduit, en effet, à faciliter la gestion des problèmes d'encombrement des renforts tout en assurant une très bonne stabilité des dits renforts.

Cette stabilité est par ailleurs augmentée selon l'invention, en dotant avantageusement chaque renfort de deux tenons répartis de part et d'autre de l'axe de la fente verticale du dit renfort.

Toujours dans l'optique de garantir une parfaite stabilité des éléments du gabarit selon l'invention, et de façon avantageuse, chaque potence et chaque renfort présentent un bord inférieur rectiligne d'appui sur la plaque-support.

De plus, avantageusement selon l'invention, le bord inférieur d'appui de chaque potence et de chaque renfort présente une entaille au niveau de chacune de ses jonctions avec un tenon, de façon à éliminer tout risque de défaut de planéité du dit bord inférieur.

Selon un autre mode de réalisation avantageux de l'invention, la base comporte une plaque-support obtenue par découpe dans une plaque, et un piétement constitué d'une couronne obtenue par découpe dans la plaque précitée d'une bande sur le pourtour de la plaque- support, et d'entretoises de liaison entre la dite plaque-support et la dite couronne.

Un tel piétement conduit à la réalisation de gabarits légers présentant un encombrement réduit, tout en possédant une très bonne rigidité résultant du fait que ce piétement forme un contour fermé.

Le gabarit selon l'invention tel que décrit ci-dessus permet donc :
- de réaliser facilement et économiquement un gabarit de contrôle très précis,
- de démonter et de remonter très rapidement les potences et les renforts sans outillage,
- de garantir un remontage précis et répétable de ces mêmes potences et renforts sur la plaque-support,
- de garantir un montage rapide et répétable des organes de guidage rainurés sur les potences, évitant un contrôle du gabarit après chaque montage,
- un stockage dans un espace minimal,
- une réalisation économique et rapide tant en coût de main d'oeuvre qu'en coût de matière,
- et d'obtenir un gabarit léger et facile à manutentionner.

D'autres caractéristiques, buts et avantages de l'invention ressortiront de la description détaillée qui suit en référence aux dessins annexés qui représentent à titre d'exemple non limitatif un mode de réalisation préférentiel de gabarit selon l'invention, ainsi que des variantes d'éléments constitutifs de ce gabarit. Sur ces dessins :
- la figure 1 est une vue en perspective d'un gabarit selon l'invention et de la tuyauterie apte à être contrôlée par ce gabarit,
- la figure 2 est une vue partielle en perspective et en mode éclaté d'une portion de ce gabarit dédiée au guidage d'un tronçon rectiligne de profilé,
- la figure 3 est une vue en perspective de cette portion de gabarit en mode assemblé,
- la figure 4 est une coupe partielle par un plan vertical A de la figure 3 représentant la zone supérieure de cette portion de gabarit,
- la figure 5 est une vue frontale représentant des moyens de fixation amovible d'une potence de gabarit selon l'invention sur la plaque-support de ce gabarit,
- la figure 6 est une vue frontale partiellement en coupe représentant une variante de moyens de fixation d'une potence de gabarit selon l'invention sur la plaque-support de ce gabarit,
- la figure 7 est une vue en perspective d'une première variante de dispositif de guidage d'un gabarit selon l'invention,
- la figure 8 est une coupe par un plan vertical d'une potence de gabarit selon l'invention équipée d'une deuxième variante de dispositif de guidage,
- les figures 9 à 15 sont de vues frontales de sept autres variantes de réalisation de dispositifs de guidage pour un gabarit selon l'invention,
- la figure 16 est une vue en perspective d'une autre variante de dispositif de guidage d'un gabarit selon l'invention,
- et la figure 17 est une vue en perspective en mode éclaté d'une variante d'un ensemble potence/renforts/dispositif de guidage d'un gabarit selon l'invention.

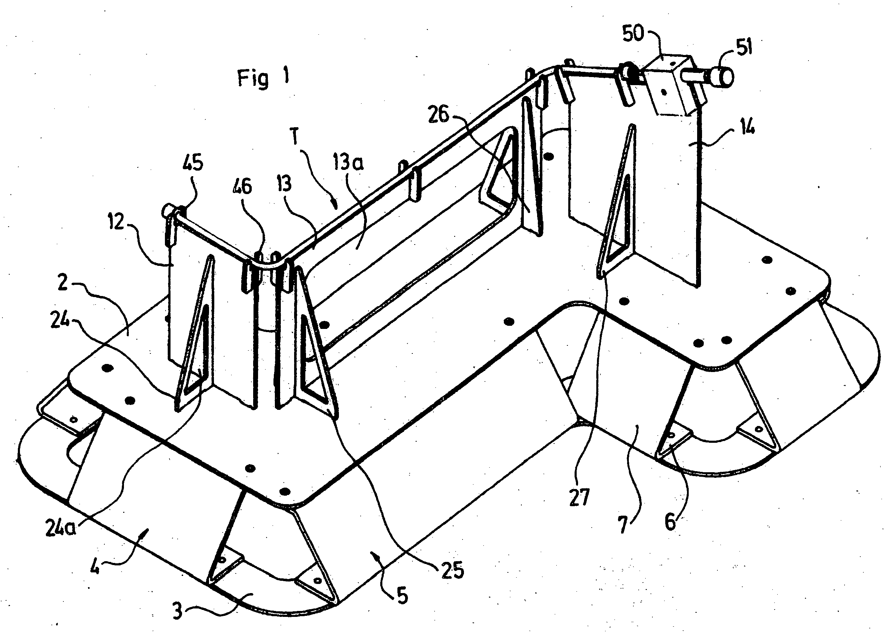

Le gabarit démontable selon l'invention représenté à titre d'exemple à la figure 1 est destiné au contrôle de profilés formés et notamment de tuyauteries cintrées, et se compose classiquement d'une superstructure définissant l'empreinte du profilé à contrôler solidarisée sur une base support.

Selon l'exemple représenté à la figure 1, ce gabarit de contrôle est adapté pour assurer le contrôle de tubes T, tel que celui également représenté à cette figure 1, comportant trois tronçons rectilignes reliés par des parties cintrées

Selon l'invention, ce gabarit comporte une base support ainsi qu'une pluralité d'éléments unitaires, potences et renforts, obtenus par découpe dans une plaque en aluminium d'une épaisseur de quelques millimètres sur laquelle sont tracés les dites base support, potences et renforts.

En premier lieu, la base support de ce gabarit comporte une plaque-support 2 présentant une forme plane « homothétique » à la projection horizontale du profilé T, afin de présenter un encombrement minimal.

Cette base support comporte, en outre, un piètement constitué d'une bande annulaire de matériau 3 obtenue par une découpe effectuée sur le pourtour de la plaque- support 2, et d'entretoises telles que 4, 5 dotées d'une aile oblique 7 de liaison entre la dite plaque-support et la dite bande annulaire, et d'ailes horizontales telles que 6 de fixation sur ces deux éléments.

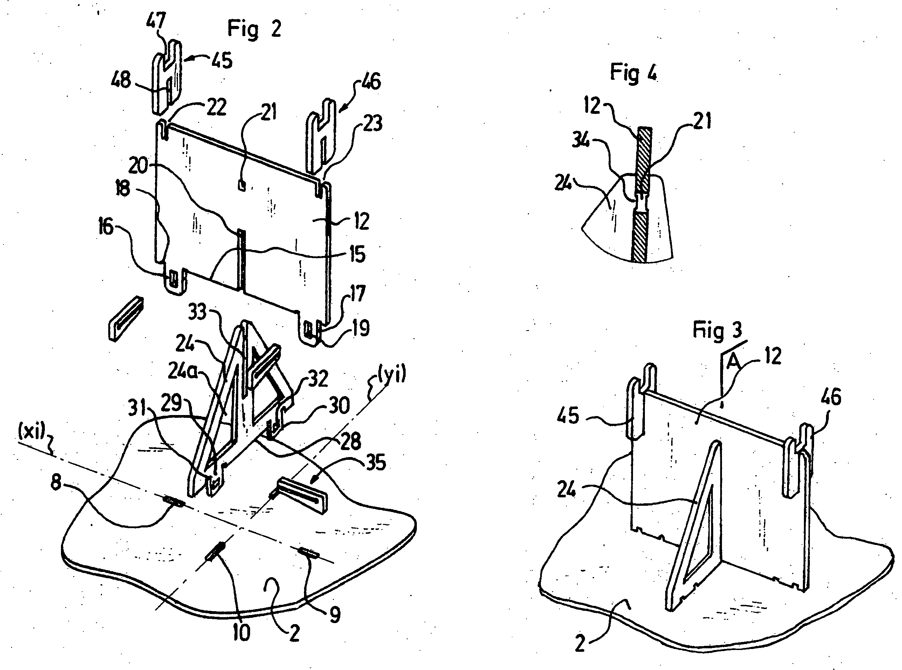

La plaque-support 2 est, en outre, percée de mortaises consistant en des lumières de section d'appui rectangulaire découpées dans la dite plaque-support, destinées au positionnement et à la fixation des potences et renforts. Ces mortaises sont disposées en fonction de la configuration du tube T à contrôler, et comprennent pour chaque tronçon rectiligne du dit tube, et tel que notamment représenté à la figure 2 :
- en vue de la fixation de la potence, deux mortaises 8, 9 ménagées de façon à s'étendre selon une parallèle horizontale (xi) à la projection orthogonale du dit tronçon rectiligne, chacune respectivement au niveau d'une des portions d'extrémité de ce tronçon rectiligne (il est également à noter qu'une ou plusieurs mortaises intermédiaires peuvent être ménagées si la longueur du tronçon rectiligne le justifie),
- en vue de la fixation de chaque renfort, deux mortaises telles que 10 ménagées de façon à s'étendre selon un axe (yi) perpendiculaire à l'axe (xi), symétriquement de part et d'autre du dit axe (xi).

En second lieu, tel que précité, le gabarit selon l'invention comporte une superstructure composée :
- de potences individuelles en nombre égal au nombre de tronçons rectilignes du profilé à contrôler, et par conséquent, pour le profilé T de trois potences 12-14,
- pour chacune des potences 12-14, et selon la longueur de cette dernière, d'au moins un renfort : dans le cadre du profilé T, et tel que représenté à la figure 1, les deux potences 12, 14 de positionnement des deux tronçons rectilignes d'extrémité du profilé T sont chacune associées à un seul renfort 24, 27 disposé à mi-longueur de ces dernières, du fait de leur relativement faible longueur. Par contre, la potence 13, de positionnement du tronçon rectiligne intermédiaire de grande longueur du profilé T, est associée à deux renforts 25, 26 disposés chacun au voisinage d'une des extrémités de la dite potence.

Chacune des potences 12-14 est formée d'une plaque plane obtenue par découpe, présentant une forme trapézoïdale rectangle délimitée par un bord inférieur horizontal d'appui 15 sur la plaque-support 2, et un bord supérieur rectiligne d'inclinaison par rapport à l'horizontale conjuguée de celle du tronçon rectiligne du profilé T positionné sur la dite potence.

Il est à noter, en outre, qu'à des fins d'optimisation du poids du gabarit, les potences, telle qu'en l'exemple la potence 13, peuvent comporter un évidement 13a de leur portion centrale.

Chacune des potences 12-14 comporte également au moins deux tenons 16, 17 d'un seul tenant avec la dite potence, et formés lors de la découpe de cette dernière. Ces tenons 16, 17 s'étendent dans le prolongement du bord inférieur 15 des potences 12-14, au voisinage de chacune des deux extrémités des dites potences. En outre, un ou plusieurs tenons intermédiaires peuvent être répartis sur la longueur des potences 12-14 si la dite longueur le justifie.

En outre, le bord inférieur d'appui 15 de chaque potence 12-14 présente une entaille 18 au niveau de chacune de ses jonctions avec un tenon 16, 17, de façon à éviter tout défaut de planéité du dit bord inférieur.

Chacun des tenons 16, 17 présente, par ailleurs, une longueur supérieure à l'épaisseur de la plaque-support 2, de façon à présenter un tronçon inférieur en saillie en sous face de la dite plaque-support, dans lequel est ménagée une lumière 19 pour l'introduction d'un élément de fixation amovible 35 de blocage sans jeu de la potence 12-14 sur la plaque-support 2.

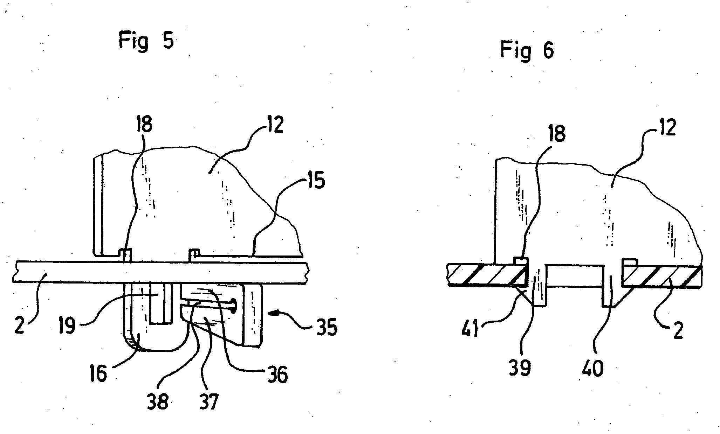

En l'exemple représenté aux figures 2 et 5, cet élément de fixation consiste en une clavette élastique 35 en forme de coin réalisée par exemple par découpe dans une plaque, comportant deux branches longitudinales 36, 37 séparées par un espace longitudinal 38, aptes à posséder un effet ressort tendant à éloigner l'une de l'autre les dites branches.

Chaque potence 12-14 présente, en outre, pour chaque renfort 24-27 associé à cette dernière, une encoche 20 formant une fente verticale s'étendant à partir du bord inférieur 15 de la dite potence, sensiblement jusqu'à mi-hauteur de cette dernière.

De plus, un orifice 21 est ménagé dans chaque potence 12-14, au-dessus de la fente verticale 20, dans l'alignement de l'axe vertical de cette dernière.

Chaque renfort 24-27 est également formé d'une plaque plane obtenue par découpe, et présente une forme générale triangulaire comportant un montant médian délimitant deux portions de surface triangulaires rectangles, symétriques ou asymétriques, comportant éventuellement un évidement central tel que 24a.

La base de ces renforts 24-27 forme, en outre, un bord rectiligne 28 d'appui sur la plaque-support 2, dans le prolongement duquel s'étendent deux tenons 29, 30 identiques à ceux des potences 12-14, et donc percés d'une lumière 32 pour l'introduction d'un élément de fixation amovible 35. De façon identique aux potences 12-14, le bord inférieur d'appui 28 de chaque renfort 24-27 présente, en outre, également une entaille 31 au niveau de chacune de ses jonctions avec un tenon 29, 30.

Chaque renfort 24-27 comporte, enfin, une fente verticale 33 ménagée à partir du sommet du dit renfort, sensiblement jusqu'à mi-hauteur de ce dernier. De plus, deux ergots tels que 34 sont ménagés en vis à vis, en saillie dans cette fente 33, de façon à se bloquer de façon réversible dans l'orifice 21 de la potence 12-14 associée.

Selon ce principe, chaque potence 12-14 et chaque renfort 24-27 sont dotés d'une fente verticale, respectivement 20, 33 positionnée de façon à obtenir un encastrement mutuel de chacun des dits éléments, potence et renfort, dans la fente verticale 20, 33 de l'autre élément, dans une position emboîtée où les dits potence et renfort s'étendent perpendiculairement.

Par ailleurs, chaque potence 12-14 est équipée d'organes de guidage présentant une empreinte adaptée pour loger le tronçon rectiligne du tube T dédié à cette potence.

Selon l'exemple représenté aux figures 2 et 3, ces organes de guidage sont constitués de chevalets tels que 45, 46 réalisés par découpe dans une plaque, de façon à présenter la forme d'un H doté :
- d'une portion inférieure 48 adaptée pour venir s'emboîter sans jeu dans une encoche verticale telle que 22, 23 ménagée dans le bord supérieur de la potence 12-14,
- et d'une portion supérieure 47 formant une gorge de dimensions adaptées pour loger, avec une tolérance de contrôle, le tube T.

Sur la base de ce principe de « chevalet », une multitude de formes d'organes de guidage peut être réalisée en jouant notamment sur les paramètres suivants : nombre et forme des empreintes, positionnement vertical (décalage) de ces empreintes, et orientation des dites empreintes.

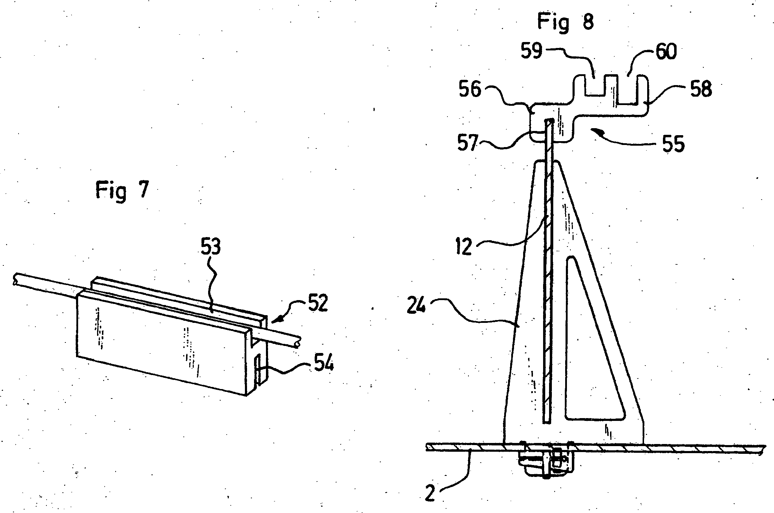

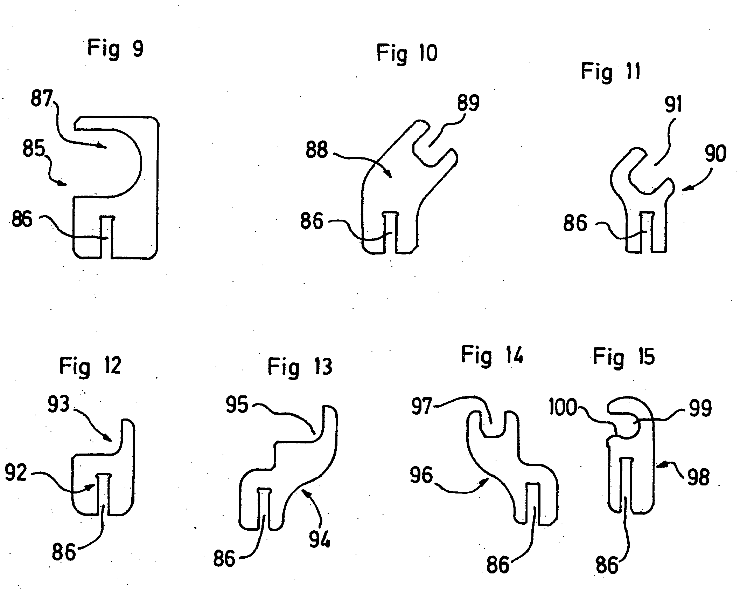

Les figures 8 à 15 représentent à titre d'exemples non limitatifs plusieurs modèles d'organes de guidage pouvant ainsi être réalisés selon ce principe, comportant chacun une portion inférieure présentant une encoche verticale 57 (figure 8) ou 86 (figures 9 à 15), adaptée pour venir s'emboîter sans jeu sur une potence 12-14. Ainsi:
- la figure 8 représente un organe de guidage 55 doté d'une portion inférieure 56 d'emboîtement sur le bord supérieur d'une potence 12, et d'une portion supérieure 58 décalée latéralement par rapport à la portion inférieure 56, dans laquelle sont ménagées deux empreintes juxtaposées consistant en deux gorges 58, 59 en forme de U s'étendant à des niveaux de hauteur différents,
- la figure 9 représente un organe de guidage 85 dont l'empreinte 87 consiste en une gorge en forme de U orienté de façon que son axe de symétrie s'étende horizontalement,
- la figure 10 représente un organe de guidage 88 dont l'empreinte 89 consiste en une gorge en forme de U orienté de façon que son axe de symétrie soit incliné d'un angle de 45°,
- la figure 11 représente un organe de guidage 90 dont l'empreinte 91 consiste en une gorge en forme de U décalé horizontalement par rapport à celui de la figure 10, mais orienté, tel que ce dernier, de façon que son axe de symétrie soit incliné d'un angle de 45°,
- la figure 12 représente un organe de guidage 92 dont l'empreinte 93 consiste en un dièdre droit formant deux faces de référence perpendiculaires de positionnement du tronçon rectiligne du profilé T, dont une face horizontale axée sur le plan vertical de la potence,
- la figure 13 représente un organe de guidage 94 dont l'empreinte 95 consiste en un dièdre droit formant deux faces de référence perpendiculaires de positionnement du tronçon rectiligne du profilé T, dont une face horizontale décalée latéralement par rapport au plan vertical de la potence,
- la figure 14 représente un organe de guidage 96 dont l'empreinte 97 consiste en une gorge en forme de U orienté de façon que son axe de symétrie s'étende verticalement, et positionné de façon que le dit axe de symétrie soit décalé latéralement par rapport au plan vertical de la potence,
- et la figure 15 représente un organe de guidage 98 similaire à celui de la figure 9, mais dont l'empreinte 99 comporte deux ergots 100 en saillie dans la dite empreinte, de façon à conférer une forme rétentive à cette dernière.

La figure 7 représente une variante de conception d'un organe de guidage susceptible d'équiper une potence 12-14 selon l'invention.

Selon cette figure, l'organe de guidage est formé d'un barreau 52 usiné sur toute sa longueur de façon à présenter une section en forme de H présentant une rainure inférieure 54 adaptée pour coiffer sans jeu la potence, et une rainure supérieure 52 de section adaptée pour loger le profilé.

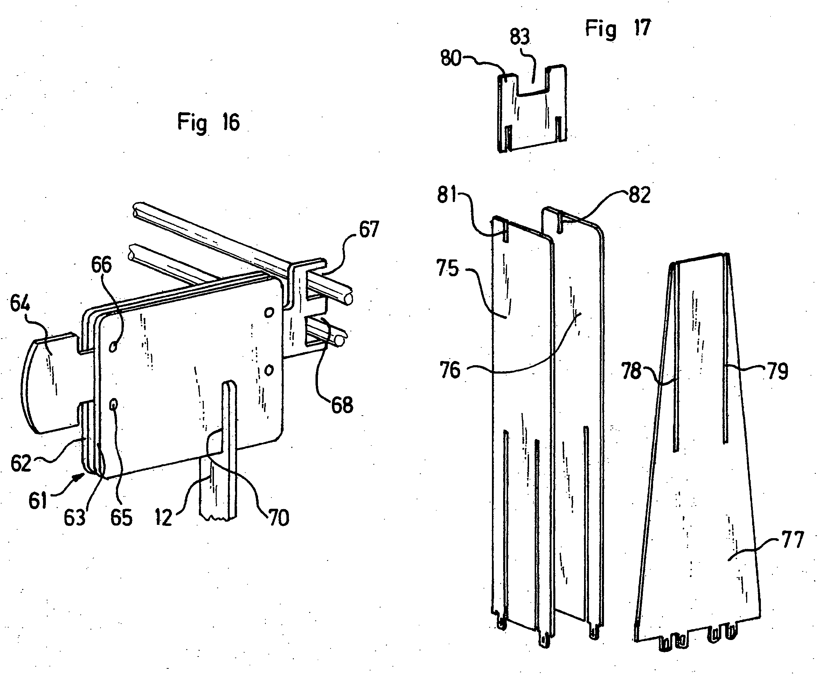

La figure 16 représente, quant à elle, un élément de guidage d'une conception particulière, présentant la propriété de pouvoir s'escamoter horizontalement en vue de la mise en place et du retrait du profilé à contrôler.

Cet élément de guidage comporte une partie fixe 61 constituée de deux plaques verticales 62, 63 maintenues parallèlement à distance l'une de l'autre au moyen de goupilles telles 65, 66 disposées de façon à délimiter, entre les dites plaques, un couloir horizontal apte à loger un coulisseau 64 constituant l'organe mobile de guidage.

Selon l'exemple représenté, les deux plaques 63, 64 présentent, en outre, en regard, une encoche verticale 70 d'ajustement de la partie fixe 61 sur une potence 12.

L'organe mobile 64 comporte, quant à lui, deux empreintes superposées 67, 68 formant chacune une gorge orientée horizontalement.

Le gabarit selon l'invention peut également comporter, tel que représenté à la figure 1, un indexeur 50 de type connu comportant une pige 51, positionné sur une des potences d'extrémité 14 de la superstructure et destiné au contrôle de l'extrémité du tube T.

La figure 6 représente une variante de potence 12 dotée d'un tenon de forme adaptée pour se verrouiller sur la plaque-support 2 sans nécessiter d'élément de fixation amovible.

A cet effet, ce tenon présente une forme d'encoche formée de deux pattes d'encliquetage 39, 40 dotées d'un crochet 41 apte à venir se verrouiller en sous face de la plaque-support 2, les dites pattes d'encliquetage étant déformables élastiquement entre une position naturelle écartée de verrouillage et une position rapprochée de déverrouillage.

La figure 17 représente, enfin, une variante particulièrement adaptée à la réalisation de potences de grandes hauteurs.

Selon cette variante, chaque potence est « doublée », c'est-à-dire composée de deux potences identiques 75, 76 adaptées pour être positionnées parallèlement sur la plaque-support 2, et pour être « entretoisées » au moyen d'un renfort unique 77 doté de deux fentes verticales 78, 79 aptes à permettre d'emboîter le dit renfort avec les deux potences 75, 76.

Selon ce mode de réalisation, l'organe de guidage 80 est également unique et adapté pour s'ajuster dans deux encoches 81, 82 ménagées chacune dans une des potences 75, 76. De plus, et en l'exemple, cet organe de guidage 80 est doté d'une empreinte unique 83 constituée d'une gorge.

## Revendications

1. Gabarit de contrôle de la géométrie de profilés (T) formés et/ou cintrés présentant des tronçons rectilignes et des tronçons cintrés, le dit gabarit de contrôle étant composé d'une base (2-5) comportant une plaque (2), dite plaque-support, dans laquelle sont ménagées des lumières (8-10), et d'une superstructure (12-14, 24-27, 45, 46, 50, 51) définissant une empreinte du profilé (T) à contrôler et dotée de tenons (16, 17, 29, 30) adaptés pour s'ajuster et s'encastrer chacun dans une lumière (8-10) de la plaque-support (2), où :
• la plaque-support (2) comprend, d'une part, des premières lumières (8, 9) s'étendant selon des parallèles (xi) aux projections orthogonales de chaque tronçon rectiligne du profilé (T), et d'autre part, pour chacun de ces tronçons rectilignes, au moins une deuxième lumière (10) s'étendant selon au moins une perpendiculaire (yi) à la projection orthogonale (xi) du dit tronçon rectiligne,
• la superstructure comprend, pour chaque tronçon rectiligne du profilé (T) :
- une potence (12-14) constituée d'une plaque plane prolongée, pour chaque première lumière (8, 9) ménagée dans la plaque-support (2) selon une parallèle (xi) à la projection orthogonale du tronçon rectiligne, d'un tenon (16, 17) adapté pour s'ajuster et s'encastrer dans la dite première lumière, la dite potence étant équipée, en partie supérieure, d'au moins un dispositif de guidage (45, 46 ; 52) du dit tronçon rectiligne,
- au moins un renfort (24-27) constitué d'une plaque plane prolongée, pour chaque deuxième lumière (10) ménagée dans la plaque-support (2) selon une perpendiculaire (yi) à la projection orthogonale (xi) du tronçon rectiligne, d'un tenon (29, 30) adapté pour s'ajuster et s'encastrer dans la dite deuxième lumière,
- la dite potence et chacun des dits renforts comportant chacun une encoche (20, 33) formant une fente verticale ménagée de façon à s'étendre respectivement depuis la partie inférieure de la potence (12-14) et la partie supérieure du renfort (24-27), les dites fentes verticales étant positionnées de façon à obtenir un encastrement mutuel de chacun des éléments, potence et renfort, dans la fente verticale (20, 33) de l'autre élément, dans une position emboîtée où les dits potence et renfort s'étendent perpendiculairement,
- chaque tenon (16, 17, 29, 30) formé dans le prolongement de la potence (12-14) et d'un renfort (24-27) présentant une longueur supérieure à l'épaisseur de la plaque-support (2) adaptée pour dépasser en sous face de cette dernière, et comportant une forme d'encoche (19, 32 ; 39, 40) apte à permettre d'assurer une fixation rigide et sans jeu de la potence et du renfort sur la plaque-support.

2. Gabarit de contrôle selon la revendication 1 **caractérisé en ce que** chaque tenon (16, 17, 29, 30) des potences (12-14) et des renforts (24-27) comporte une forme d'encoche (19, 32) adaptée pour définir un logement pour des moyens de fixation amovible (35) tels que notamment goupille ou clavette éventuellement élastique.

3. Gabarit de contrôle selon la revendication 1 **caractérisé en ce que** chaque tenon (16, 17, 29, 30) des potences (12-14) et des renforts (24-27) comporte une forme d'encoche formée de deux pattes (39, 40), dont au moins une patte d'encliquetage, aptes à venir se verrouiller en sous face de la plaque-support (2), et déformables élastiquement entre une position naturelle écartée de verrouillage et une position rapprochée de déverrouillage.

4. Gabarit de contrôle selon l'une des revendications 1 à 3 **caractérisé en ce que** les dispositifs de guidage (45, 46 ; 52 ; 55 ; 85 ; 88 ; 90 ; 92 ; 94 ; 96 ; 98) équipant les potences (12-14) comportent une rainure inférieure (48 ; 54 ; 57 ; 86) apte à venir coiffer sans jeu les dites potences.

5. Gabarit de contrôle selon l'une des revendications 1 à 4 **caractérisé en ce que** les dispositifs de guidage (45, 46 ; 52 ; 55 ; 85 ; 88 ; 90 ; 92 ; 94 ; 96 ; 98) équipant les potences (12-14) comportent au moins une empreinte supérieure (47 ; 53 ; 59, 60 ; 87 ; 89 ; 91 ; 93 ; 95 ; 97 ; 99) de forme adaptée pour loger un tronçon rectiligne du profilé (T), la dite empreinte étant axée sur le plan vertical de la potence (12-14) ou axée sur un plan vertical décalé latéralement par rapport au dit plan vertical de la potence (12-14).

6. Gabarit de contrôle selon la revendication 5 **caractérisé en ce que** chaque empreinte supérieure (47 ; 53 ; 59, 60 ; 87 ; 89 ; 91 ; 97 ; 99) des dispositifs de guidage (45, 46 ; 52 ; 55 ; 85 ; 88 ; 90 ; 96 ; 98) consiste en une gorge en forme générale de U présentant un axe de symétrie s'étendant dans un plan orienté d'un angle compris entre 0 et 90 degrés par rapport au plan vertical de la potence (12-14).

7. Gabarit de contrôle selon la revendication 6 **caractérisé en ce que** l'empreinte supérieure (99) des dispositifs de guidage (98) comporte au moins un ergot (100) en saillie dans la dite empreinte, de façon à conférer une forme rétentive à cette empreinte.

8. Gabarit de contrôle selon la revendication 5 **caractérisé en ce que** chaque empreinte supérieure (93 ; 95) des dispositifs de guidage (92 ; 94) consiste en un dièdre droit (93 ; 95) formant deux faces de référence perpendiculaires de positionnement du tronçon rectiligne du profilé (T).

9. Gabarit de contrôle selon l'une des revendications précédentes **caractérisé en ce que** chaque renfort (24-27) comporte au moins un ergot (34) formant une saillie dans la fente verticale (33) du dit renfort, dans la partie supérieure de la dite fente, adapté pour venir se loger dans un évidement (21) ménagé sur chaque potence (12-14).

10. Gabarit de contrôle selon l'une des revendications précédentes **caractérisé en ce que** chaque renfort (24-27) présente une forme asymétrique relativement à l'axe de la fente verticale (20) de la potence correspondante (12-14).

11. Gabarit de contrôle selon l'une des revendications précédentes **caractérisé en ce que** chaque renfort (24-27) comporte deux tenons (29, 30) répartis de part et d'autre de l'axe de la fente verticale (33) du dit renfort.

12. Gabarit de contrôle selon l'une des revendications précédentes **caractérisé en ce que** chaque potence (12-14) et chaque renfort (24-27) présentent un bord inférieur rectiligne (15, 28) d'appui sur la plaque-support (2).

13. Gabarit de contrôle selon la revendication 12 **caractérisé en ce que** le bord inférieur d'appui (15, 28) de chaque potence (12-14) et de chaque renfort (24-27) présente une entaille (18, 31) au niveau de chacune de ses jonctions avec un tenon (16, 17, 29, 30).

14. Gabarit de contrôle selon l'une des revendications précédentes **caractérisé en ce que** la base comporte une plaque-support (2) obtenue par découpe dans une plaque, et un piétement constitué d'une couronne (3) obtenue par découpe dans la plaque précitée d'une bande sur le pourtour de la plaque-support (2), et d'entretoises (4, 5) de liaison entre la dite plaque-support et la dite couronne.

## Patentansprüche

1. Prüflehre für die Geometrie von Profilen (T), die geformt und/oder gebogen sind und geradlinige Abschnitte und gebogene Abschnitte aufweisen, wobei die Prüflehre aus einer Basis (2-5) mit einer Platte (2), Trägerplatte genannt, in der Aussparungen (8-10) angeordnet sind, und einem Aufbau (12-14, 24-27, 45, 46, 50, 51) besteht, der eine Aufnahme für das zu prüfende Profil (T) definiert, und mit Zapfen (16, 17, 29, 30) ausgestattet ist, die dafür eingerichtet sind, sich jeweils in eine Aussparung (8-10) der Trägerplatte (2) einzupassen und einzusenken, wobei
die Trägerplatte (2) einerseits erste Aussparungen (8, 9) umfasst, die sich entlang von Parallelen (xi) zu den orthogonalen Vorsprüngen jedes geradlinigen Abschnitts des Profils (T) erstrecken, und andererseits für jeden dieser geradlinigen Abschnitte mindestens eine zweite Aussparung (10) umfasst, die sich entlang mindestens einer Senkrechten (yi) zum orthogonalen Vorsprung (xi) des geradlinigen Abschnitts erstreckt,
der Aufbau für jeden geradlinigen Abschnitt des Profils (T) Folgendes umfasst:
einen Träger (12-14), bestehend aus einer länglichen, ebenen Platte, für jede erste Aussparung (8, 9), die in der Trägerplatte (2) entlang einer Parallelen (xi) zum orthogonalen Vorsprung des geradlinigen Abschnitts angeordnet ist, einem Zapfen (16, 17), der dafür eingerichtet ist, sich in die erste Aussparung einzupassen und einzusenken, wobei der Träger im oberen Teil mit mindestens einer Führungsvorrichtung (45, 46; 52) des geradlinigen Abschnitts ausgestattet ist,
mindestens eine Stütze (24-27) bestehend aus einer länglichen, ebenen Platte, für jede zweite Aussparung (10), die in der Trägerplatte (2) entlang einer Senkrechten (yi) zum orthogonalen Vorsprung (xi) des geradlinigen Abschnitts angeordnet ist, einem Zapfen (29, 30), der dafür eingerichtet ist, sich in die zweite Aussparung einzupassen und einzusenken,
wobei der Träger und jede der Stützen jeweils einen Einschnitt (20, 33) aufweisen, der einen senkrechten Spalt bildet, der so angeordnet ist, dass er sich jeweils vom unteren Teil des Trägers (12-14) und vom oberen Teil der Stütze (24-27) erstreckt, wobei die senkrechten Spalte so positioniert sind, dass ein Einstecken jedes der Elemente, Träger und Stütze, im senkrechten Spalt (20, 33) des anderen Elements in ineinandergesteckter Position erreicht wird, in der der Träger und die Stütze sich senkrecht erstrecken,
jeder Zapfen (16, 17, 29, 30), der in der Verlängerung des Trägers (12-14) und einer Stütze (24-27) gebildet ist, eine größere Länge als die Dicke der Trägerplatte (2) aufweist, die eingerichtet ist, um an der Unterseite der letzteren hervorzustehen, und eine Form von Einschnitt (19, 32; 39, 40) umfasst, die geeignet ist, eine starre, spielfreie Befestigung des Trägers und der Stütze auf der Trägerplatte zu ermöglichen.

2. Prüflehre nach Anspruch 1, **dadurch gekennzeichnet, dass** jeder Zapfen (16, 17, 29, 30) der Träger (12-14) und der Stützen (24-27) eine Form von Einschnitt (19, 32) umfasst, die eingerichtet ist, eine Unterbringung für lösbare Befestigungsmittel (35) wie insbesondere einen eventuell elastischen Stift oder eine eventuell elastische Passfeder zu definieren.

3. Prüflehre nach Anspruch 1, **dadurch gekennzeichnet, dass** jeder Zapfen (16, 17, 29, 30) der Träger (12-14) und der Stützen (24-27) eine Form von Einschnitt umfasst, die aus zwei Laschen (38, 40) gebildet ist, davon mindestens eine Rastlasche, die geeignet sind, sich an der Unterseite der Trägerplatte (2) zu verriegeln, und zwischen einer natürlichen entfernten Position der Verriegelung und einer nahen Position der Entriegelung elastisch verformbar sind.

4. Prüflehre nach einem der Ansprüche 1 bis 3, **dadurch gekennzeichnet, dass** die Führungsvorrichtungen (45, 46; 52; 55; 85; 88; 90; 92; 94; 96; 98), mit denen die Träger (12-14) ausgestattet sind, eine untere Nut (48; 54; 57; 86) aufweisen, die geeignet ist, spielfrei auf den Trägern aufzusitzen.

5. Prüflehre nach einem der Ansprüche 1 bis 4, **dadurch gekennzeichnet, dass** die Führungsvorrichtungen (45, 46; 52; 55; 85; 88; 90; 92; 94; 96; 98), mit denen die Träger (12-14) ausgestattet sind, mindestens eine obere Aufnahme (47; 53; 59, 60; 87; 89; 91; 93; 95; 97; 99) einer Form umfassen, die eingerichtet ist, einen geradlinigen Abschnitt des Profils (T) aufzunehmen, wobei sich die Aufnahme auf der senkrechten Ebene des Trägers (12-14) oder auf einer senkrechten Ebene, die in Bezug auf die vertikale Ebene des Trägers (12-14) seitlich verschoben ist, befindet.

6. Prüflehre nach Anspruch 5, **dadurch gekennzeichnet, dass** jede obere Aufnahme (47; 53; 59, 60; 87; 89; 91; 97; 99) der Führungsvorrichtungen (45, 46; 52; 55; 85; 88; 90; 96; 98) aus einer allgemein U-förmigen Kehle besteht, die eine Symmetrieachse aufweist, die sich in einer Ebene, ausgerichtet in einem Winkel zwischen 0 und 90 Grad in Bezug auf die vertikale Ebene des Trägers (12-14), erstreckt.

7. Prüflehre nach Anspruch 6, **dadurch gekennzeichnet, dass** die obere Aufnahme (99) der Führungsvorrichtungen (98) mindestens eine von der Aufnahme hervorspringende Nase (100) umfasst, so dass dieser Aufnahme eine Halterungsform verliehen wird.

8. Prüflehre nach Anspruch 5, **dadurch gekennzeichnet, dass** jede obere Aufnahme (93; 95) der Führungsvorrichtungen (92; 94) aus einem geraden Dieder (93; 95) besteht, der zwei senkrechte Bezugsseiten der Positionierung des geradlinigen Abschnitts des Profils (T) bildet.

9. Prüflehre nach einem der vorhergehenden Ansprüche, **dadurch gekennzeichnet, dass** jede Stütze (24-27) mindestens eine Nase (34) umfasst, die einen Vorsprung im vertikalen Spalt (33) der Stütze im oberen Teil des Spalts bildet, eingerichtet, um in einer an jedem Träger (12-14) angeordneten Aussparung (21) aufgenommen zu werden.

10. Prüflehre nach einem der vorhergehenden Ansprüche, **dadurch gekennzeichnet, dass** jede Stütze (24-27) eine asymmetrische Form in Bezug zur Achse des vertikalen Spalts (20) des entsprechenden Trägers (12-14) aufweist.

11. Prüflehre nach einem der vorhergehenden Ansprüche, **dadurch gekennzeichnet, dass** jede Stütze (24-27) zwei Zapfen (29, 30) umfasst, die beiderseits der Achse des vertikalen Spalts (33) der Stütze verteilt sind.

12. Prüflehre nach einem der vorhergehenden Ansprüche, **dadurch gekennzeichnet, dass** jeder Träger (12-14) und jede Stütze (24-27) einen geradlinigen unteren Stützrand (15, 28) auf der Trägerplatte (2) aufweist.

13. Prüflehre nach Anspruch 12, **dadurch gekennzeichnet, dass** der untere Stützrand (15, 28) jedes Trägers (12-14) und jeder Stütze (24-27) eine Einkerbung (18, 31) an jeder ihrer Verbindungen mit einem Zapfen (16, 17, 29, 30) aufweist.

14. Prüflehre nach einem der vorhergehenden Ansprüche, **dadurch gekennzeichnet, dass** die Basis eine Trägerplatte (2), die aus einer Platte ausgeschnitten wird, und ein Gestell bestehend aus einer Krone (3), die durch Abschneiden eines Streifens am Umfang der Trägerplatte (2) erhalten wird, und Abstandsstücke (4, 6) zur Verbindung zwischen der Trägerplatte und der Krone umfasst.

## Claims

1. Control gauge device for controlling the geometry of shaped and/or bent profiles (T) having straight sections and bent sections, said control gauge device comprising a base (2-5) having a plate (2), called support plate, which has holes (8-10) formed therein, and a superstructure (12-14, 24-27, 45, 46, 50, 51) defining an imprint of the profile (T) to control and having tenons (16, 17, 29, 30) adapted each to adjust and be fitted into a hole (8-10) in the support plate (2), wherein:
• the support plate (2) comprises, firstly, first holes (8, 9) extending in the direction of lines (xi) parallel to the orthogonal projections of each straight section of the profile (T), and secondly, for each of these straight sections, at least one second hole (10) extending in the direction of at least one line (yi) perpendicular to the orthogonal projection (xi) of said straight section,
• the superstructure comprises, for each straight section of the profile (T) :
- a support (12-14) made up of a flat plate including, for each first hole (8, 9) provided in the support plate (2) in the direction of a line (xi) parallel to the orthogonal projection of the straight section, a tenon (16,17) adapted to adjust and be fitted into said first hole, said support being equiped, on its upper portion, with at least one guiding device (45, 46, 52) for said straight section,
- at least one brace (24-27) made up of a flat plate including, for each second hole (10) provided in the support plate (2) in the direction of a line (yi) perpendicular to the orthogonal projection of the straight section, a tenon (29, 30) adapted to adjust and be fitted into said second hole,
- said support and each one of said braces each comprising a notch (20, 33) forming a vertical slot extending respectively from the bottom portion of the support (12-14) and the upper portion of the brace (24-27), said vertical slots being positioned so as to allow a mutual fitting of each of the elements, support and brace, in the vertical slot (20, 33) of the other element, in a fitting position wherein the support and the brace extend perpendicularly,
- each tenon (16, 17, 29, 30) formed in the extension of the support (12-14) and of a brace (24-27) having a length longer than the thickness of the support plate (2) adapted to jut outwardly underneath the latter, and comprising a shape of notch (19, 32, 39, 40) suitable for rigidly positionning without any play the support and the brace on the support plate.

2. Control gauge device according to claim 1 **characterized in that** each tenon (16, 17, 29, 30) of the supports (12-14) and the braces (24-27) comprises a shape of notch (19, 32) which is adapted to define a housing for detachable fixing means (35) such as a pin or wedge which is possibly elastic.

3. Control gauge device according to claim 1 **characterized in that** each tenon (16, 17, 29, 30) of the supports (12-14) and the braces (24-27) comprises a shape of notch formed from two tabs (39, 40), at least one of which is a clip tab, able to be locked onto the underside of the support plate (2), and elastically deformable between a natural locking position and a unlocking position.

4. Control gauge device according to any of claims 1 to 3 **characterized in that** the guiding devices (45, 46 ; 52 ; 55 ; 85 ; 88 ; 90 ; 92 ; 94 ; 96 ; 98) equipping the supports (12-14) comprise a bottom groove (48 ; 54 ; 57 ; 86) able to fit on top of said supports without any play.

5. Control gauge according to any of the claims 1 to 4 **characterized in that** the guiding devices (45, 46 ; 52 ; 55 ; 85 ; 88 ; 90 ; 92 ; 94 ; 96 ; 98) equipping the supports (12-14) include at least one upper imprint (47 ; 53 ; 59, 60 ; 87 ; 89 ; 91 ; 93 ; 95 ; 97 ; 99) having a shape suitable to receive a straight section of the profile (T), said imprint being centered on the vertical plane of the support (12-14) or centered on a vertical plane shifted relative to said vertical plane of the support (12-14).

6. Control gauge device according to claim 5 **characterized in that** each upper imprint (47 ; 53 ; 59, 60 ; 87 ; 89 ; 91 ; 97 ; 99) of the guiding devices (45, 46 ; 52 ; 55 ; 85 ; 88 ; 90; 96 ; 98) consists of a "U"-shaped recess having an axis of symmetry extending into a plane oriented at an angle of between 0° and 90° relative to the vertical plane of the support (12-14).

7. Control gauge device according to claim 6 **characterized in that** the upper imprint (99) of the guiding devices (98) comprises at least one spur (100) protruding in said imprint, so as to give this imprint a retentive shape.

8. Control gauge device according to claim 5 **characterized in that** each upper imprint (93, 95) of the guiding devices (92, 94) consists of a right dihedron (93, 95) forming two perpendicular sides of reference for the positioning of the straight section of the profile (T).

9. Control gauge device according to any of the preceding claims **characterized in that** each brace (24-27) comprises at least one spur (34) protruding in the vertical slot (33) of said brace, in the upper part of said slot, adapted to be housed in a recess (21) made in each support (12-14).

10. Control gauge device according to any of the preceding claims **characterized in that** each brace (24-27) has an asymmetrical shape relative to the axis of the vertical slot (20) of the corresponding support (12-14).

11. Control gauge device according to any of the preceding claims **characterized in that** each brace (24-27) comprises two tenons (29, 30) distributed between both sides of the axis of the vertical slot (33) of said brace.

12. Control gauge device according to any of the preceding claims **characterized in that** each support (12-14) and each brace (24-27) have a straight bottom edge (15, 28) for resting on the support plate (2).

13. Control gauge device according to claim 12 **characterized in that** the bottom resting edge (15, 28) of each support (12-14) and of each brace (24-27) has a notch (18, 31) at the level of each one of its junctions to a tenon (16, 17, 29, 30).

14. Control gauge device according to any of the preceding claims **characterized in that** the base comprises a support plate (2) obtained by cutting out from a sheet, and a foot base consisting of a rim (3) obtained by cutting out, in the previously mentioned sheet, a strip from around the edge of the support plate (2), and spacers (4, 5) for joining said support plate and said rim.
